# EUROPÄISCHE PATENTANMELDUNG

(11) **EP 2 230 204 A1**
(43) Veröffentlichungstag der Anmeldung: **22.09.2010**
(21) Anmeldenummer: 09155723.1
(22) Anmeldetag: 20.03.2009
(51) Int. Cl.: B66B 1/30, B66B 11/04

(54) **Treibscheibenaufzug, Aufzugsantrieb für einen solchen Treibscheibenaufzug und Verfahren zum Betreiben eines solchen Aufzugsantriebs**

(71) Anmelder: Inventio AG, 6052 Hergiswil (CH)
(72) Erfinder: Weinberger, Karl, 6405, Immensee (CH); Studer, Christian, 6004, Luzern (CH)

(57) **Zusammenfassung**

Die Erfindung betrifft einen Treibscheibenaufzug (A) mit mindestens einer Aufzugskabine (1) und mindestens einem Aufzugsantrieb (4); wobei der Aufzugsantrieb (4) mindestens einen Stator (41) und mindestens einen Rotor (42) aufweist; welcher Rotor (42) mit mindestens einer Treibscheibe (13) verbunden ist; auf welcher Treibscheibe (13) mindestens ein Tragmittel (2) im Reibschluss aufliegt; welches Tragmittel (2) derart mit der Aufzugskabine (1) verbunden ist, dass eine Drehbewegung des Rotors (42) und der Treibscheibe (13) die Aufzugskabine (1) bewegt; dadurch gekennzeichnet, dass der Rotor (42) ausschliesslich aus weichmagnetischem Werkstoff besteht.

## Beschreibung

Die Erfindung betrifft einen Treibscheibenaufzug, einen Aufzugsantrieb für einen solchen Treibscheibenaufzug und ein Verfahren zum Betreiben eines solchen Aufzugsantriebs gemäss dem Oberbegriff des unabhängigen Patentanspruchs.

Die Schrift EP0779233A2 offenbart einen Treibscheibenaufzug mit einem flach bauenden Aufzugsantrieb, bei dem ein Durchmesser von Stator oder Rotor nicht nur wesentlich grösser als eine Achslänge des Aufzugsantriebs, sondern auch grösser als ein Durchmesser einer mit dem Rotor verbundenen Treibscheibe ist. Der Vorteil dieser flachen Bauweise liegt in den vielfältigen Dispositionsmöglichkeiten eines solch flach bauenden Aufzugsantriebs im Aufzugsschacht. Sowohl Stator als Rotor sind mit Induktionsspulen bewickelt.

Die Schrift WO99/43590A1 zeigt einen Treibscheibenaufzug mit Polyurethan-ummantelten Riemen als Tragmittel für eine Aufzugskabine. Auch hier ist ein Rotor mit einer Treibscheibe verbunden. Nun erwärmt sich der Aufzugsantrieb im Betrieb, was unter Umständen nachteilig für vergleichsweise temperaturempfindliches Polyurethan sein kann. Aus diesem Grund weist der Rotor Permanentmagnete auf, was im Betrieb des Aufzugsantriebs zu einer relativ geringen Erwärmung des Rotors und dementsprechend niedrigen Wärmebelastung der an der Treibscheibe aufliegenden Riemen führt, und was sich vorteilhaft auf die Lebensdauer der Riemen auswirkt.

Aufgabe der vorliegenden Erfindung ist es, einen bekannten Aufzugsantrieb für einen Treibscheibenaufzug weiterzuentwickeln.

Diese **Aufgabe** wird durch die Erfindung nach Massgabe der kennzeichnenden Merkmale des unabhängigen Patentanspruchs gelöst.

**Erfindungsgemäss** besteht der Treibscheibenaufzug aus mindestens einer Aufzugskabine und mindestens einem Aufzugsantrieb; wobei der Aufzugsantrieb mindestens einen Stator und mindestens einen Rotor aufweist; welcher Rotor mit mindestens einer Treibscheibe verbunden ist; auf welcher Treibscheibe mindestens ein Tragmittel im Reibschluss aufliegt; welches Tragmittel derart mit der Aufzugskabine verbunden ist, dass eine Drehbewegung des Rotors und der Treibscheibe die Aufzugskabine bewegt, **dadurch gekennzeichnet, dass** der Rotor ausschliesslich aus weichmagnetischem Werkstoff besteht.

Dies hat mehrere Vorteile. So ist der Rotor weder mit Induktionsspulen bewickelt noch mit Permanentmagneten versehen, wodurch der Rotor, alleine bei Betrachtung der Materialkosten, kostengünstig ist. Auch lässt sich ein Rotor der ausschliesslich aus weichmagnetischem Werkstoff besteht, einfach durch Formguss und spanabhebende Formgebung herstellen. Zudem ist dieser Rotor im Betrieb dauerhaft und wartungsfrei.

Vorteilhafte Weiterbildungen der Erfindung sind in den abhängigen Patentansprüchen beschrieben.

Vorteilhafterweise sind Rotor und Treibscheibe stoffschlüssig und/oder formschlüssig und/oder kraftschlüssig miteinander verbunden. Vorteilhafterweise ist der Rotor geblecht und die Treibscheibe gegossen; und Rotor und Treibscheibe sind stoffschlüssig und/oder formschlüssig und/oder kraftschlüssig miteinander verbunden.

Dies hat den Vorteil, dass Rotor und Treibscheibe separat voneinander, funktionsoptimiert hergestellt werden. So kann der Rotor aus einem Blechpaket gebildet sein, welches Blechpaket durch Magnetfeldänderung induzierte Wirbelstromverluste minimiert; während die Treibscheibe aus robustem und dauerhaftem Eisenguss besteht. Auch ist diese Rotor/Treibscheiben-Einheit zu Wartungszwecken im Vergleich zu einem Aufzugsantrieb mit Permanentmagneten einfach ausbaubar, welche Permanentmagnete eine Magnetkraft ausüben, die beim Ausbau überwunden werden muss, was den Aufzugsantrieb im Unterhalt wartungsfreundlich und kostengünstig macht. Auch ist der Werkstoff der Rotor/Treibscheiben-Einheit vollständig rezyklierbar, wodurch bei Ersatz die Kosten tief bleiben und die Umwelt geschont wird.

Vorteilhafterweise sind Rotor und Treibscheibe einstückig miteinander verbunden.

Dies hat den Vorteil, dass Rotor und Treibscheibe nicht separat voneinander hergestellt werden müssen, was kostengünstig ist.

Vorteilhafterweise ist ein Durchmesser der Treibscheibe kleiner als ein Durchmesser von Stator und/oder Rotor.

Dies hat den Vorteil, dass im Gleichgewichtszustand eine vom Aufzugsantrieb aufzubringende Kraft kleiner als eine an der Treibscheibe angreifende Gegenkraft ist. Diese Untersetzung resultiert in einem klein bauenden Aufzugsantrieb, welcher eine Treibscheibe von unverändertem Durchmesser mit einem vergleichsweise niedrigeren Drehmoment und einer höheren Rotationsgeschwindigkeit bewegt. Ein solcher klein bauender Aufzugsantrieb ermöglicht vielfältige Dispositionsmöglichkeiten im Aufzugsschacht. Auch ist eine Aufzugsschachtausnützung des Treibscheibenaufzugs durch einen solch klein bauenden Aufzugsantriebs gut, weil vom vorgegebenen Aufzugsschachtvolumen wenig für den Aufzugsantrieb benötigt wird und somit viel für eine relativ grosse Aufzugskabine zur Verfügung steht. Die im Durchmesser kleine Treibscheibe benötigt wenig Material, was kostengünstig ist.

Vorteilhafterweise ist das Tragmittel ein Riemen mit Tragelementen aus Stahldrähten oder Aramidfasern, welche Tragelemente von einem Elastomer ummantelt sind.

Dies hat den Vorteil, dass Riemen mit Tragelementen mit kleinen Durchmessern verwendbar sind. Zum Erreichen einer grossen Biegewechselzahl und somit einer hohen Lebensdauer des Tragmittels, beträgt das Durchmesser-Verhältnis von Treibscheibe zu Tragelement mit Litzen aus Stahldrähten gemäss der Norm EN_81-1:1998 einen Faktor von 40. Je kleiner der Durchmesser der Litzen ist, desto kleiner kann der Durchmesser der Treibscheibe gewählt werden, was wiederum in einem klein bauenden Aufzugsantrieb resultiert. Auch erzeugt ein Rotor, der nicht mit Induktionsspulen bewickelt ist kaum Wärme, wodurch die Lebensdauer der Elastomer-ummantelten Tragmittel nicht durch Wärmebelastung beeinträchtigt wird. Zudem bewirkt die Elastomerummantelung eine Dämpfung von Tragelement-Schwingungen, was den Fahrtkomfort des Passagiers im Betrieb der Aufzugsanlage erhöht. Schliesslich dämpft die Elastomerummantelung Körperschall des Aufzugsantriebs, was ebenfalls den Fahrtkomfort des Passagiers im Betrieb der Aufzugsanlage erhöht.

Vorteilhafterweise ist die Treibscheibe über mindestens ein Lager zentral gelagert. Vorteilhafterweise ist das Lager weitgehend symmetrisch zwischen Tragmitteln an der Treibscheibe angeordnet. Vorteilhafterweise ist der Rotor über zwei Lager gelagert. Vorteilhafterweise sind die zwei Lager weitgehend symmetrisch zu Tragmitteln der Treibscheibe angeordnet.

Dies hat den Vorteil, dass mehrere Ausführungen einer einfachen und robusten Lagerung realisierbar sind. In einer Ausführung wird die gesamte Last von Aufzugskabine und Gegengewicht symmetrisch über Tragmittel in ein zentrales Lager geleitet; in einer anderen Ausführung wird gesamte Last von Aufzugskabine und Gegengewicht in zwei symmetrisch zu Tragmitteln der Treibscheibe angeordnete Lager geleitet.

Vorteilhafterweise ist der Aufzugsantrieb ein geschalteter Reluktanzmotor, bei dem einzelne Induktionsspulen von mindestens einer Aufzugssteuerung mit in zeitlicher Länge und Form variablen Steuerimpulsen geschaltet sind.

Dies hat den Vorteil, dass dank moderner Leistungselektronik wie Insulated-Gate Bipolar Transistor (IGBT), usw. eine Ansteuerung von Induktionsspulen des Aufzugsantriebs über zeitlich mehr oder weniger lange Steuerimpulse und/oder unterschiedlich geformte Steuerimpulse möglich ist.

Vorteilhafterweise weist der Stator mehrere Stator-Pole auf; der Rotor weist mehrere Rotor-Pole auf; eine Anzahl Stator-Pole ist von einer Anzahl Rotor-Pole unterschiedlich; die Stator-Pole sind mit Induktionsspulen bewickelt; solange ein elektrischer Statorstrom eine Induktionsspule durchfliesst erzeugt diese Induktionsspule ein magnetisches Feld; welches magnetische Feld einer Induktionsspule eine Reluktanzkraft auf einen nächstgelegenen Rotor-Pol ausübt und diesen zum Stator-Pol der Induktionsspule zieht.

Dies hat den Vorteil, dass eine durch Änderung des magnetischen Flusses erzeugte Reluktanzkraft benutzt wird, welche im Vergleich zu einem Aufzugsantrieb mit Permanentmagneten, welche Permanentmagnete eine eingeprägte Magnetkraft haben, einfach auf Betriebspunkte des Aufzugsantriebs einstellbar ist, was zu einem hohen Wirkungsgrad des Aufzugsantriebs führt.

Vorteilhafterweise ist der Aufzugsantrieb so von der Aufzugssteuerung geschaltet, dass ein Wirkungsgrad des Aufzugsantriebs weitgehend unabhängig von einer Zuladung der Aufzugskabine ist. Vorteilhafterweise weist der Stator mehrere Stator-Pole auf; der Rotor weist mehrere Rotor-Pole auf; eine Form der Stator-Pole und eine Gegenform der Rotor-Pole sind so zueinander geformt, dass beim Schalten des Aufzugsantrieb von der Aufzugssteuerung ein Wirkungsgrad des Aufzugsantriebs weitgehend unabhängig von einer Zuladung der Aufzugskabine ist.

Dies hat den Vorteil, dass bei einer Halbzuladung, wo sich das Gewichtsverhältnis von Aufzugskabine und Gegengewicht weitgehend ausgleicht, der Aufzugsantrieb zum Aufbringen einer niedrigen Antriebsleistung mit entsprechenden Steuerimpulsen geschaltet wird; und dass bei einer Leerzuladung oder Vollzuladung der Aufzugsantrieb zum Aufbringen einer höheren Antriebsleistung mit entsprechenden Steuerimpulsen geschaltet wird, mit dem Effekt, dass der Wirkungsgrad weitgehend konstant bleibt. Zudem lassen sich Unsymmetrien an der Form des Stator-Pols und der Gegenform Rotor-Pol anbringen, um den Verlauf der Reluktanzkraft gezielt zu beeinflussen.

Vorteilhafterweise ist der Aufzugsantrieb so von der Aufzugssteuerung geschaltet, dass ein Wirkungsgrad des Aufzugsantriebs weitgehend unabhängig von einer Fahrkurve der Aufzugskabine ist. Vorteilhafterweise weist der Stator mehrere Stator-Pole auf; der Rotor weist mehrere Rotor-Pole auf; eine Form der Stator-Pole und eine Gegenform der Rotor-Pole sind so zueinander geformt, dass beim Schalten des Aufzugsantrieb von der Aufzugssteuerung ein Wirkungsgrad des Aufzugsantriebs weitgehend unabhängig von einer Fahrkurve der Aufzugskabine ist. Unsymmetrien lassen sich so an der Form des Stator-Pols und der Gegenform Rotor-Pol anbringen, dass der Verlauf der Reluktanzkraft gezielt beeinflusst wird.

Dies hat den Vorteil, dass in einer Beschleunigungsphase einer Aufwärtsfahrt der voll geladenen Aufzugskabine der Aufzugsantrieb zum Aufbringen einer grossen Antriebsleistung mit entsprechenden Steuerimpulsen geschaltet wird; und dass in einer Konstantphase mit konstanter Geschwindigkeit der Aufzugsantrieb zum Aufbringen einer niedrigeren Antriebsleistung mit entsprechenden Steuerimpulsen geschaltet wird, wobei der Wirkungsgrad weitgehend konstant bleibt.

Vorteilhafterweise ist der Aufzugsantrieb so von der Aufzugssteuerung geschaltet, dass eine Welligkeit eines Drehmoments des Aufzugsantriebs minimal ist. Vorteilhafterweise weist der Stator mehrere Stator-Pole auf; der Rotor weist mehrere Rotor-Pole auf; eine Form der Stator-Pole und eine Gegenform der Rotor-Pole sind so zueinander geformt, dass beim Schalten des Aufzugsantrieb von der Aufzugssteuerung eine Welligkeit eines Drehmoments des Aufzugsantriebs minimal ist.

Dies hat den Vorteil, dass ein beim Ausschalten des elektrischen Statorstroms entstehendes Rastmoment des Aufzugsantriebs minimiert wird, was in einer minimalen Welligkeit des Drehmoments des Aufzugsantriebs resultiert. Auch hier lassen sich Unsymmetrien an der Form des Stator-Pols und der Gegenform Rotor-Pol anbringen, um den Verlauf der Reluktanzkraft gezielt zu beeinflussen.

Vorteilhafterweise ist der Aufzugsantrieb ein Innenläufer, bei dem ein Durchmesser des Rotors kleiner als ein Durchmesser des Stators ist.

Dies hat den Vorteil, dass der Rotor zu Wartungszwecken einfach und rasch ausbaubar ist, was den Aufzugsantrieb im Unterhalt kostengünstig macht. Auch ist der Werkstoff des Rotors vollständig rezyklierbar, wodurch bei Ersatz die Kosten tief bleiben und die Umwelt geschont wird.

Vorteilhafterweise unterschreitet der Aufzugsantrieb im Betrieb einen Schalleistungspegel von 68dB, vorzugsweise 65dB, vorzugsweise 62dB. Vorteilhafterweise unterschreitet der Aufzugsantrieb im Betrieb einen Beschleunigungspegel von 90dB, vorzugsweise 85dB, vorzugsweise 80dB.

Dies hat den Vorteil, dass der Aufzugsantrieb sowohl bezüglich Luftschall als auch bezüglich Körperschall für einen Reluktanzmotor überraschend geräuscharm ist. Besonders drehstromgesteuerte Reluktanzmotoren sind dafür bekannt, laut zu sein. Der geräuscharme Aufzugsantrieb führt zu einem hohen Fahrkomfort des Passagiers im Betrieb des Treibscheibenaufzugs.

Vorteilhafterweise ist der Aufzugsantrieb ein geschalteter Reluktanzmotor, der für ein Antreiben des Rotors elektrische Energie aus einer elektrischen Stromversorgung aufnimmt und der aus einem Bremsen des Rotors elektrische Energie generiert und in die elektrische Stromversorgung speist.

Dies hat den Vorteil, dass im Betrieb des Aufzugsantriebs elektrische Energie zurückgewonnen wird, was den Aufzugsantrieb kostengünstig im Unterhalt macht.

Anhand der **Figuren** werden Ausführungsbeispiele der Erfindung im Detail erläutert. Hierzu zeigt, teilweise schematisiert:
- Fig. 1: eine Ansicht eines Teils eines Treibscheiben- aufzugs mit einer Aufzugskabine;
- Fig. 2: eine Ansicht eines Teils einer ersten Ausführungsform eines Aufzugsantriebs eines Treibscheibenaufzugs gemäss Fig. 1;
- Fig. 3: eine Ansicht eines Teils einer zweiten Ausführungsform eines Aufzugsantriebs eines Treibscheibenaufzugs gemäss Fig. 1;
- Fig. 4: einen Querschnitt durch einen Teil des Aufzugsantriebs gemäss Fig. 2 oder 3;
- Fig. 5: ein Diagramm eines erstes Ausführungsbeispiels eines Steuerimpulses zur Steuerung des Aufzugsantriebs gemäss Fig. 2 bis 4;
- Fig. 6: ein Diagramm eines zweiten Ausführungsbeispiels eines Steuerimpulses zur Steuerung des Aufzugsantriebs gemäss Fig. 2 bis 4;
- Fig. 7: ein Diagramm eines dritten Ausführungsbeispiels eines Steuerimpulses zur Steuerung des Aufzugsantriebs gemäss Fig. 2 bis 4;
- Fig. 8: ein Diagramm eines vierten Ausführungsbeispiels eines Steuerimpulses zur Steuerung des Aufzugsantriebs gemäss Fig. 2 bis 4;
- Fig. 9: ein Diagramm eines Drehmoments des Aufzugsantriebs gemäss Fig. 2 bis 4 bei verschiedenenen Zuladungen der Aufzugskabine gemäss Fig. 1; und
- Fig. 10: ein Diagramm eines Drehmoments des Aufzugsantriebs gemäss Fig. 2 bis 4 bei verschiedenen Phasen einer Fahrkurve der Aufzugskabine gemäss Fig. 1.

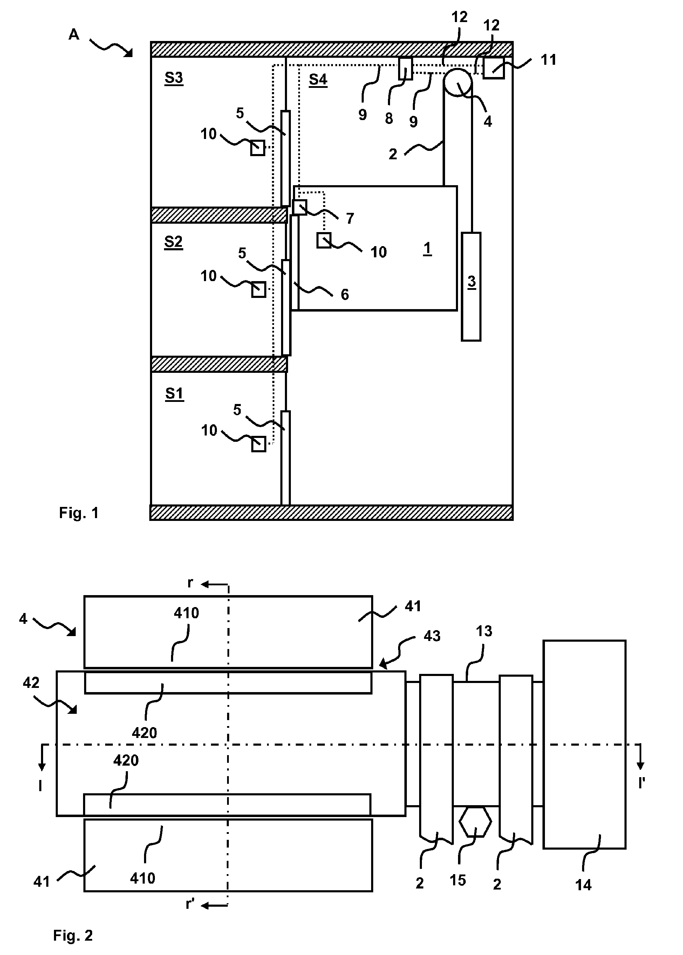

Ein **Treibscheibenaufzug A** ist in einem Gebäude mit mehreren Stockwerken S1 bis S3 installiert. Fig. 1 zeigt drei Stockwerke S1 bis S3 und eine Aufzugskabine 1 in einem Aufzugsschacht S4. Die Aufzugskabine 1 ist über mindestens ein Tragmittel 2 mit einem Gegengewicht 3 verbunden. Zum Verfahren von Aufzugskabine 1 und Gegengewicht 3 wird das Tragmittel 2 von einem Aufzugsantrieb 4 im Reibschluss in Bewegung gesetzt, so dass Passagiere in der Aufzugskabine 1 in Aufwärts- oder Abwärtsrichtung im Gebäude befördert werden. Das Tragmittel 2 ist ein Riemen mit Tragelementen aus Stahldrähten oder Aramidfasern, welche Stahldrähte oder Aramidfasern zu Litzen verseilt sind, welche Litzen des Tragelements von einem Elastomer wie Polyurethan, Gummi, usw. ummantelt sind. Die Tragelemente haben Durchmesser von 4mm, vorzugsweise 3mm, vorzugsweise 1.5mm. Einzig aus Gründen der Übersichtlichkeit ist in Fig. 1 nur ein Treibscheibenaufzug A mit einer Aufzugskabine 1 dargestellt. Bei Kenntnis der Erfindung kann der Fachmann einen Treibscheibenaufzug A mit mehreren Aufzugskabinen und/oder mehreren Gegengewichten und/oder mehreren Aufzugsantrieben für ein Gebäude mit mehr oder weniger als drei Stockwerken realisieren. Auch kann der Fachmann die Erfindung für einen Treibscheibenaufzug A mit Doppel- und Dreifachkabinen; mit mehreren übereinander angeordneten, unabhängig voneinander verfahrbaren Aufzugskabinen pro Aufzugsschacht; für einen Treibscheibenaufzug A ohne Gegengewicht; usw. realisieren. Zudem kann das Tragmittel 2 auch ein nacktes Rundseil, ein Elastomer-ummanteltes Rundseil, usw. sein. Gemäss Fig. 1 weist jedes Stockwerk S1 bis S3 eine Stockwerkstür 5 auf und die Aufzugskabine 1 weist eine Aufzugstür 6 auf. Die Stockwerkstüren 5 und die Aufzugstür 6 werden von mindestens einem Türantrieb 7 geöffnet bzw. geschlossen, so dass Passagiere die Aufzugskabine 1 betreten und verlassen können. Bei Kenntnis der Erfindung kann der Fachmann natürlich auch einen Treibscheibenaufzug A mit einer Aufzugskabine mit mehreren Aufzugstüren und/oder mit mehreren Stockwerkstüren pro Stockwerk realisieren.

Gemäss Fig. 1 ist mindestens eine **Aufzugssteuerung 8** über mindestens eine Signalleitung 9 mit dem Aufzugsantrieb 4 und dem Türantrieb 7 verbunden. Die Aufzugssteuerung 8 steuert das Verfahren der Aufzugskabine 1 und das Öffnen und Schliessen der Stockwerkstüren 5 und der Aufzugstür 6. Ein Passagier kann über ein Rufeingabemittel 10 mindestens einen Ruf tätigen. Der Ruf wird vom Rufeingabemittel 10 über die Signalleitung 9 an die Aufzugssteuerung 8 übermittelt. Beispielsweise tätigt der Passagier einen Stockwerkruf auf einem Rufeingabestockwerk, woraufhin die Aufzugssteuerung 8 das Verfahren einer Aufzugskabine 1 auf das Rufeingabestockwerk steuert und nach Einfahrt der Aufzugskabine 1 auf dem Rufeingabestockwerk das Öffnen der Stockwerkstür 5 und der Aufzugstür 6 steuert. Der Passagier besteigt die Aufzugskabine 1 und tätigt in der Aufzugskabine 1 über ein Rufeingabemittel 10 einen Kabinenruf auf ein Zielstockwerk. Der Ruf wird vom Rufeingabemittel 10 über die Signalleitung 9 an die Aufzugssteuerung 8 übermittelt. Die Aufzugssteuerung 8 steuert daraufhin das Schliessen der Stockwerkstür 5 und der Aufzugstür 6 auf dem Rufeingabestockwerk. das Verfahren der Aufzugskabine 1 auf das Zielstockwerk sowie nach Einfahrt der Aufzugskabine 1 auf dem Zielstockwerk das Öffnen der Stockwerkstür 5 und der Aufzugstür 6. Natürlich ist es für den Passagier auch möglich, bereits auf dem Rufeingabestockwerk über ein Rufeingabemittel 10 einen Zielruf auf das Zielstockwerk zu tätigen, woraufhin das Tätigen eines Kabinenrufs nicht notwendig ist.

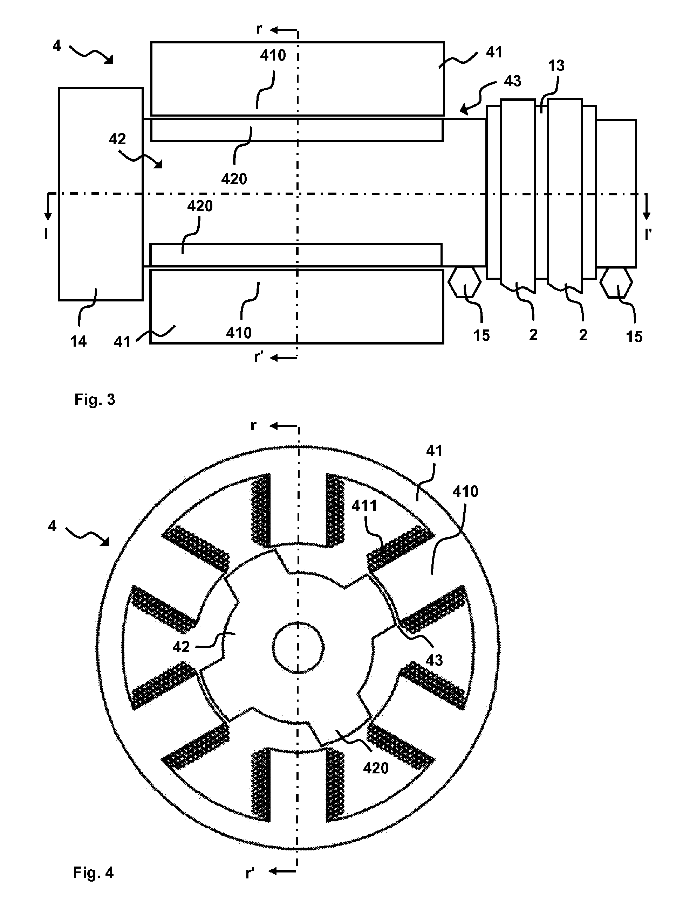

Fig. 2 bis 4 zeigen Details des **Aufzugsantriebs 4.** Fig. 2 und 3 sind Ansichten entlang einer Längachse 11'; Fig. 4 ist ein Querschnitt entlang einer Radialachse rr' gemäss Fig. 2 oder 3. Der Aufzugsantrieb 4 ist ein geschalteter Reluktanzmotor. Mindestens ein Stator 41 umschliesst mindestens einen Rotor 41. Stator 41 und Rotor 42 sind weitgehend kreissymmetrisch bezüglich der Längsachse 11' aufgebaut und durch mindestens einen Luftspalt 43 voneinander beabstandet. Der Ausdruck "weitgehend" wird im Sinne der Erfindungsunterlagen ausgelegt, dass er einen Ermessensspielraum von +/-10%, vorzugsweise +/-5% umfasst. Der Aufzugsantrieb 4 ist somit ein Innenläufer. Der Stator 41 weist Stator-Pole 410 auf; der Rotor weist Rotor-Pole 420 auf. Eine Anzahl Stator-Pole 410 unterscheidet sich von einer Anzahl Rotor-Pole 420. So weist der Aufzugsantrieb 4 gemäss Fig. 4 sechs Stator-Pole 410 und vier Rotor-Pole 420 auf. Gemäss Fig. 4 sind die Stator-Pole 410 im Winkel von weitgehend 60° zueinander am Stator angeordnet und die Rotor-Pole 420 sind im Winkel von weitgehend 90° zueinander am Rotor 42 angeordnet. Diese Darstellung ist vereinfachend und schematisch. Gemäss Fig. 2 und 3 erstreckt sich der Rotor 41 zumindest über einen Bereich mit Rotor-Polen 420 eines wellenförmigen Körpers mit Längsachse 11'. Bei Kenntnis der Erfindung kann der Fachmann einen Aufzugsantriebs 4 mit wesentlich mehr als sechs Stator-Polen 410 sowie mit wesentlich mehr als vier Rotor-Polen 420 verwenden. Auch kann die Anordnung von Stator 41 und Rotor 42 kinematisch derart geändert werden, dass der Aufzugsantrieb 4 ein Aussenläufer ist, bei dem der Rotor den Stator umschliesst.

Die Stator-Pole 410 sind mit Induktionsspulen 411 bewickelt. Gemäss Fig. 4 sind parallel zur Radialachse rr' liegenden Aussenkanten der Stator-Pole 410 mit Induktionsspulen 411 bewickelt. Die Induktionsspulen 411 werden mit einem elektrischen Statorstrom bestromt. Solange ein elektrischer Statorstrom eingeschaltet ist und eine Induktionsspule 411 durchfliesst, erzeugt diese Induktionsspule 411 ein magnetisches Feld. Das magnetische Feld einer Induktionsspule 411 eines Stator-Pols 410 übt eine **Reluktanzkraft** auf den nächstgelegenen Rotor-Pol 420 aus und zieht diesen zum Stator-Pol 410. Sobald sich der Rotor-Pol 420 in kürzester Winkelentfernung ω zum Stator-Pol 410 befindet, wird der elektrische Statorstrom der Induktionsspule 411 dieses Stator-Pols 410 abgeschaltet. In kürzester Winkelentfernung ω zwischen Stator-Pol 410 und Rotor-Pol 420 sind Aussenkanten von Stator-Pol 410 und Rotor-Pol 420 nur durch den Luftspalt 43 voneinander beanstandet. Durch zeitlich gesteuertes Ein- und Auschalten des elektrischen Statorstroms der einzelnen Induktionsspulen 411 der Stator-Pole 410 lassen sich die Rotor-Pole 420 und somit der Rotor 42 im Uhrzeigersinn oder im Gegenuhrzeigersinn mehr oder weniger schnell bewegen.

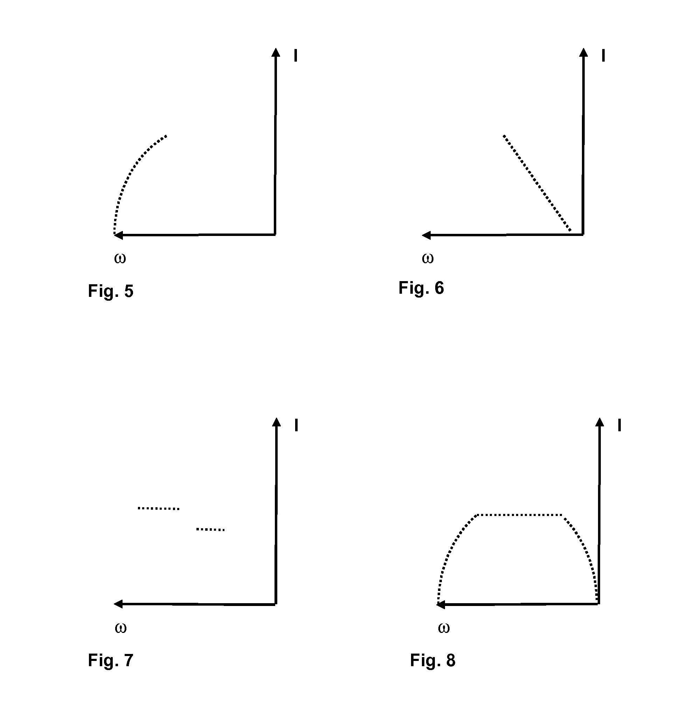

Die Ansteuerung der einzelnen Induktionsspulen 411 der Stator-Pole 410 mit elektrischem Statorstrom erfolgt durch die Aufzugssteuerung 8. Dazu weist die Aufzugssteuerung 8 mindestens eine Steuerelektronik auf. Gemäss Fig. 1 ist die Aufzugssteuerung 8 über mindestens eine elektrische Zuleitung 12 mit einer elektrischen Stromversorgung 11 verbunden. Die elektrische Stromversorgung 11 ist beispielsweise ein Gebäudespannungsnetz für elektrischen Drehstrom mit einer elektrischen Spannung von ungefähr 380VAC oder 220VAC bei einer Frequenz von 50Hz oder für elektrischen Wechselstrom mit einer elektrischen Spannung zwischen 90VAC und 270VAC bei Frequenzen zwischen 40Hz und 60Hz. Das Gebäudespannungsnetz kann natürlich auch für Gleichstrom eine elektrische Spannung von 24VDC oder 42VDC aufweisen. Die Steuerelektronik richtet einen elektrischen Drehstrom oder elektrischen Wechselstrom in einen elektrischen Statorstrom. Die Aufzugssteuerung 8 schaltet den elektrischen Statorstrom geregelt mit in Länge und Form variablen **Steuerimpulsen I.** Die Fig. 5 bis 8 zeigen vier Ausführungsbeispiele von Steuerimpulsen I zur Steuerung des Aufzugsantriebs 4. In diesen Diagrammen ist eine elektrische Stromstärke des Steuerimpuls I bezüglich einer Winkelentfernung ω zwischen einem Stator-Pol 410 und einem Rotor-Pol 420 aufgetragen. Gemäss Fig. 5 ist der Steuerimpuls I ein aufsteigendes Kreissegment, mit welchem die Induktionsspule 411 des Stator-Pols 410 in weiter Winkelentfernung ω geschaltet wird. Gemäss Fig. 6 ist der Steuerimpuls I eine abfallende Gerade, mit welcher die Induktionsspule 411 des Stator-Pols 410 in kurzer Winkelentfernung ω geschaltet wird. Gemäss Fig. 7 besteht der Steuerimpuls I aus zwei horizontalen Geraden von unterschiedlicher zeitlicher Länge und unterschedlicher elektrischer Stromstärke, mit welchem zwischengetakteten Steuerimpuls I die Induktionsspule 411 des Stator-Pols 410 in mittlerer Winkelentfernung ω geschaltet wird. Gemäss Fig. 8 besteht der Steuerimpuls I aus drei Kreissegmenten mit variierender elektrischer Stromstärke, mit welchen die Induktionsspule 411 des Stator-Pols 410 über die gesamte Winkelentfernung ω geschaltet wird.

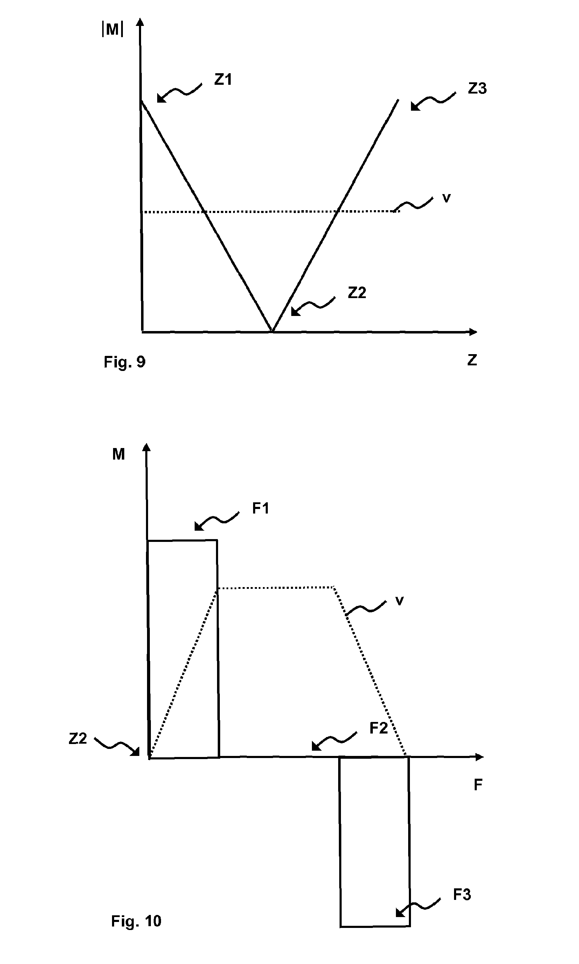

Die Aufzugssteuerung 8 verwendet als Regelgrösse eine Zuladung Z der Aufzugskabine 1 und/oder eine Fahrkurve F der Aufzugskabine 1 und/oder ein Drehmoment M des Aufzugsantriebs 4. Im Folgenden werden diese Regelgrössen unter Zuhilfenahme der Fig. 9 und 10 im Detail erläutert:
- Die **Zuladung Z** der Aufzugskabine 1 kann durch eine in der Aufzugskabine 1 angeordnete Lastmatte und/oder durch eine an der Aufzugstür 6 angeordneten Lichtschranke und/oder durch Zählen der Rufe auf Rufeingabestockwerken und/oder durch Erfassen des Drehmomentes M des Aufzugsantriebs 4 erfolgen. Bei Kenntnis der Erfindung hat der Fachmann diesbezüglich vielfältige Möglichkeiten. Fig. 9 zeigt ein Diagramm des absoluten Drehmoments M des Aufzugsantriebs 4 bei verschiedenen Zuladungen Z. Bei konstanter Geschwindigkeit v der Aufzugskabine 1 ist eine Antriebsleistung proportional zum Drehmoment M. Ein Gewichtsverhältnis von Aufzugskabine 1 zu Gegengewicht 3 ist in der Regel so ausgelegt, dass das Gewicht des Gegengewichts 3 gleich dem Leergewicht der Aufzugskabine 1 plus einer Halbzuladung Z2 der Aufzugskabine 1 ausgelegt ist. Gemäss Fig. 9 ist in diesem wahrscheinlichen Fall vom Aufzugsantrieb 4 nur eine geringe Antriebsleistung notwendig, um die Aufzugskabine 1 zu verfahren. Dementsprechend muss der Aufzugsantrieb 4 für das Verfahren einer Aufzugskabine 1 mit einer Leerzuladung Z1 oder einer Vollzuladung Z3 eine grosse Antriebsleistung aufbringen.
- Fig. 10 zeigt ein Diagramm des Drehmonents M des Aufzugsantriebs 4 bei verschiedenen Phasen F1 bis F3 einer **Fahrkurve F** der Aufzugskabine 1 in Aufwährtsfahrt. Die Fahrkurve F besteht gemäss Fig. 10 aus einer Beschleunigungsphase F1 mit steigender Geschwindigkeit v der Aufzugskabine 1, einer Konstantphase F2 mit konstanter Geschwindigkeit v der Aufzugskabine 1 und einer Abbremsphase F3 mit fallender Geschwindigkeit v der Aufzugskabine 1. Die Konstantphase F2 ist vordefiniert und beträgt je nach Aufzugstyp beispielsweise 1m/sec oder 2.5m/sec oder auch 10m/sec. Auch die Beschleunigungsphase F1 und die Abbremsphase F3 sind vordefiniert und betragen weitgehend 0.5m/sec². Für eine Fahrt der Aufzugskabine 1 von einem ersten Stockwerk S1 bis S3 zu einem zweiten Stockwerk S1 bis S3 dauern die Beschleunigungsphase F1 und die Abbremsphase F3 immer weitgehend gleich lang, während Dauer der Konstantphase F2 von der Distanz zwischen dem ersten Stockwerk S1 bis S3 und dem zweiten Stockwerk S1 bis S3 abhängt. Bei Halbzuladung Z2 muss der Aufzugsantrieb 4 in der Beschleunigungsphase F1 ein relativ grosses Drehmoment M aufbringen, während der Aufzugsantrieb 4 in der Konstantphase F2 kein Drehmoment M mehr aufbringen muss und in der Abbremsphase F3 sogar Energie generiert. Der Schnittpunkt der Abszisse mit der Ordinate ist eine Funktion der Zuladung Z und der Fahrtrichtung der Aufzugskabine 1 im Aufzugsschacht S4. Bei Vollzuladung Z3 und Aufwärtsfahrt der Aufzugskabine 1 im Aufzugsschacht S4, verschiebt sich der Schnittpunkt der Abszisse nach unten; d.h. der Aufzugsantrieb 4 muss in den Phasen F1 und F2 ein höheres Drehmoment M aufbringen und die Energiegeneration der Phase F3 ist niedriger. Andererseits verschiebt sich der Schnittpunkt der Abszisse bei Leerzuladung Z1 und Aufwärtsfahrt der Aufzugskabine 1 im Aufzugsschacht S4 nach oben; d.h. der Aufzugsantrieb 4 muss in der Phase F1 ein niedrigeres Drehmoment M aufbringen und die Energiegeneration der Phasen F2 und F3 erhöht sich.
- Eine Welligkeit des Drehmoments M wird durch die zeitliche Länge und die Form der Steuerimpulse I minimal gehalten. Die einzelnen Induktionsspulen 411 werden so geschaltet, dass ein beim Ausschalten des elektrischen Statorstroms entstehendes Rastmoment des Aufzugsantriebs 4 minimal ist.

Die Antriebsleistung des Aufzugsantriebs 4 ergibt sich aus dem Produkt von Drehmoment M und Geschwindigkeit des wellenförmigen Körpers mit Längsachse 11'. Diese Geschwindigkeit ist proportional zur Geschwindigkeit v der Aufzugskabine 1. Die Aufzugssteuerung 8 schaltet den Aufzugsantrieb 4 somit je nach Zuladung Z der Aufzugskabine 1 und/oder je nach Phase F1 bis F3 der Fahrkurve F der Aufzugskabine 1 unterschiedlich. Dazu weist die Aufzugssteuerung 8 beispielsweise einen Geschwindigkeitsregelkreis auf. Während einer Fahrt der Aufzugskabine 1 gibt der Geschwindigkeitsregelkreis zu jedem Zeitpunkt der Fahrt der Aufzugskabine 1 eine bestimmte Geschwindigkeit v vor. Der Geschwindigkeitsregelkreis weist mindestens eine Konkordanz-Tabelle mit vordefinierten Paarungen von Geschwindigkeiten v der Aufzugskabine 1 und entsprechenden Drehmomenten M des Aufzugsantriebs 4 auf. Dieses Drehmoment M wird vom Geschwindigkeitsregelkreis aus der Konkordanz-Tabelle gelesen und als Sollwert verwendet. Am Aufzugsantrieb 4 wird ein Drehmoment M als Istwert gemessen. Abweichungen von Istwert und Sollwert regelt der Geschwindigkeitsregelkreis nach, in dem bei zu niedrigem Istwert ein höherer Sollwert aus der Konkordanz-Tabelle gelesen und vorgegeben wird, oder in dem bei zu hohem Istwert ein niedrigerer Sollwert aus der Konkordanz-Tabelle gelesen und vorgegeben. Die Aufzugssteuerung 8 schaltet den Aufzugsantrieb 4 vorteilhafterweise so, dass ein **Wirkungsgrad** υ des Aufzugsantriebs 4 weitgehend unabhängig von der Zuladung Z der Aufzugskabine 1 und/oder der Fahrkurve F der Aufzugskabine 1 ist. Als Wirkungsgrad υ des Aufzugsantriebs 4 wird ein Verhältnis aus Antriebsleistung und aufgenommener Leistung verstanden. Zum Erbringen einer hohen Antriebsleistung nimmt der Aufzugsantrieb 4 somit viel elektrischen Strom auf, zum Erbringen einer niedrigen Antriebsleistung nimmt der Aufzugsantrieb 4 entsprechend weniger elektrischen Strom auf. Im einfachsten Fall ist die Leistungsaufnahme des Aufzugsantriebs 4 proportional zur zeitlichen Länge und elektrischen Stromstärke der Steuerimpulse I.

Wirkungsgrad υ und Welligkeit des Drehmoments M werden auch durch eine Form der Stator-Pole 410 und eine entsprechende Gegenform der Rotor-Pole 420 minimal halten. Die Seitenkanten und Aussenkanten der Stator-Pole 410 sowie die Seitenkanten und Aussenkanten der Rotor-Pole 420 sind weitgehend symmetrisch geformt. Dementsprechend ist auch der Luftspalt 43 der auftritt, sobald sich ein Stator-Pol 410 und ein Rotor-Pol 420 in kürzester Winkelentfernung ω zueinander befinden, weitgehend konstant gross. Trotzdem reichen kleine, gezielt angebrachte Unsymmetrien bei der Form der Stator-Pole 410 und der Gegenform der Rotor-Pole 420 aus, um die Reluktanzkraft derart zu beeinflussen, dass der Wirkungsgrad υ des Aufzugsantriebs 4 weitgehend unabhängig von der Zuladung Z der Aufzugskabine 1 und/oder der Fahrkurve F der Aufzugskabine 1 ist und/oder dass das beim Ausschalten des elektrischen Statorstroms entstehende Rastmoment des Aufzugsantriebs 4 minimal ist.

Die Aufzugssteuerung 8 schaltet den Aufzugsantrieb 4 vorteilhafterweise so, dass ein **Schalleistungspegel L_{W}** des Aufzugsantriebs 4 von 68dB, vorzugsweise 65dB, vorzugsweise 62dB unterschritten wird. Unter Schalleistung W wird gemäss der Norm DIN_EN_ISO_3744:1995-11 eine von einer Quelle als Luftschall abgestrahlte Schallenergie dividiert durch die Zeit verstanden. Der Schalleistungspegel L_{W} ist der zehnfache dekadische Logarithmus des Verhältnisses der von der zu untersuchenden Quelle abgestrahlten Schalleistung zu einer Bezugsschalleistung von 1pW. Der Schalleistungspegel L_{W} wird in dB angegeben. Angaben über eine Mikrofonposition, einer Entfernung des den Luftschall erfassenden Mikrofons zur zu untersuchenden Quelle, eine Dauer der Erfassung des Luftschalls sind ebenfalls in der Norm DIN_EN_ISO_3744:1995-11 vorgeschrieben. Neben der Ausbreitung von Luftschall ist in Gebäuden auch die Ausbreitung von Körperschall zwischen Räumen eines Gebäudes geregelt. Die Norm VDI_2566-2:2004-05 definiert einen **Beschleunigungspegel L_{A}** als zehnfachen dekadischen Logarithmus eines Verhältnisses eines quadrierten Effektivwerts der Beschleunigung zu einem Quadrat eines Bezugswerts. Der Bezugswert beträgt 10µm/sec². Angaben über eine Mikrofonposition, einer Entfernung des den Körperschall erfassenden Mikrofons zur zu untersuchenden Quelle, die zu verwendenden Mittenfrequenzen von 63Hz bis 500Hz sind ebenfalls in der Norm VDI_2566-2:2004-05 vorgeschrieben. Die Aufzugssteuerung 8 schaltet den Aufzugsantrieb 4 vorteilhafterweise so, dass der Beschleunigungspegel L_{A} des Aufzugsantriebs 4 von 90dB, vorzugsweise 85dB, vorzugsweise 80dB unterschritten wird. Der Aufzugsantrieb 4 kann im Aufzugsschacht S4 oder in einem Maschinenraum angeordnet sein.

Der Aufzugsantrieb 4 nimmt für ein Antreiben des Rotors 42 elektrische Energie aus einer elektrischen Stromversorgung 11 auf und **generiert** aus einem Bremsen des Rotors 42 elektrische **Energie.** Gemäss Fig. 1 benutzt der Aufzugsantrieb 4 die über die Signalleitung 9 übermittelten Steuerimpulse I der Aufzugssteuerung 8 zum Antreiben des Rotors 42; und aus dem Bremsen des Rotors 42 generierte elektrische Energie wird über eine elektrische Zuleitung 12 in die elektrische Stromversorgung 11 gespeist. Die elektrische Stromversorgung 11 kann ein Gebäudespannungsnetz und/oder ein elektrischer Speicher wie eine Batterie, ein Akkumulator, eine Superkapazität, ein Schwungrad, usw. sein. Der elektrische Speicher kann Teil des Treibscheibenaufzugs A sein.

Der Rotor 42 ist mit mindestens einer **Treibscheibe 13** verbunden. Rotor 42 und Treibscheibe 13 sind vorteilhafterweise einstückig miteinander verbunden. Gemäss Fig. 2 und 3 erstreckt sich die Treibscheibe 13 zumindest über einen Bereich des wellenförmigen Körpers mit Längsachse 11', in dem das Tragmittel 2 auf dem wellenförmigen Körper aufliegt. Bei Kenntnis der Erfindung kann der Fachmann Rotor 42 und Treibscheibe 13 auch getrennt herstellen und stoffschlüssig und/oder formschlüssig und/oder kraftschlüssig miteinander verbinden. Rotor 42 und/oder Treibscheibe 13 bestehen ausschliesslich aus weichmagnetischem Werkstoff. Ein Werkstoff mit einer Koerzitivfeldstärke von kleiner oder gleich 1000A/m wird als weichmagnetisch bezeichnet. Beispielsweise besteht der Rotor 42 aus hämatitischem Roheisen mit Zusätzen an Kohle, Mangan, Silizium, Phosphor, usw. Der Durchmesser des Rotors 42 beträgt beispielsweise 200mm, vorteilhafterweise 100mm. Der Durchmesser der Treibscheibe 13 beträgt beispielsweise 150mm, vorteilhafterweise 85mm. Rotor 42 und/oder Treibscheibe 13 lässt/lassen sich einfach durch Formguss und spanabhebende Formgebung herstellen. Bei getrennter Herstellung von Rotor 42 und Treibscheibe 13 lässt sich der Rotor 42 aus Blechen von 2mm Dicke, vorteilhafterweise 1mm Dicke stanzen, welche Bleche in länglicher Ausdehnung parallel zueinander senkrecht zur Längsachse 11' orientiert sind. Die Bleche sind stoffschlüssig und/oder formschlüssig und/oder kraftschlüssig miteinander zu einem Blechpaket verbunden. Ein Querschnitt der Bleche kann gemäss Fig. 4 eine Gegenform mit abgeschrägten Seitenkanten und konvexen Aussenkanten aufweisen. Bei Kenntnis der vorliegenden Erfindung kann der Fachmann natürlich auch einen Rotor verwenden, der zumindest bereichsweise Permanentmagnete aufweist. Ein solcher Hybridantrieb weist eine besonders hohe Antriebsleistung auf. Auch kann der Fachmann eine Treibscheibe verwenden, die einen grösseren Durchmesser als der Rotor und/oder Stator aufweist. Dies kann dann angebracht sein, wenn die Tragelemente der Tragmittel relativ grosse Durchmesser von 8mm, 10mm oder sogar 13mm aufweisen, wonach gemäss Vorgabe der Norm EN_81-1:1998 der Durchmesser der Treibscheibe 320mm, 400mm oder 520mm aufweisen muss. Auch ist bei einer Treibscheibe 13 mit relativ grossem Durchmesser die Walkarbeit bei der Biegung des Tragmittels um die Treibscheibe 13 reduziert.

Der Aufzugsantrieb 4 weist mindestens eine **mechanische Bremse 14** auf. Gemäss Fig. 2 ist die mechanische Bremse 14 endständig an der Treibscheibe 13 angeordnet und kann eine Drehbewegung der Treibscheibe 13 bremsen. Gemäss Fig. 3 ist die mechanische Bremse 14 endständig am Rotor 42 angeordnet und kann eine Drehbewegung des Rotors 42 bremsen. Die mechanische Bremse 14 ist beispielsweise eine Backenbremse und/oder eine Magnetbremse. Bei Kenntnis der Erfindung kann der Fachmann natürlich auch andere Anordnungen der mechanischen Bremse 14 realisieren. So kann der Fachmann eine mechanische Bremse mittig am Rotor 42 anordnen. Auch kann der Fachmann zwei mechanische Bremsen 14 an Treibscheibe 13 und/oder Rotor 42 anordnen. Zudem kann der Fachmann ganz auf eine mechanische Bremse am Aufzugsantrieb verzichten und stattdessen eine mechanische Bremse an der Aufzugskabine anordnen.

Der Aufzugsantrieb 4 ist über mindestens ein **Lager 15** gelagert. Gemäss Fig. 1 ist die Treibscheibe 13 auf einem nicht eingezeichneten Träger gelagert. Gemäss Fig. 2 ist das Lager 15 beispielsweise ein Zentrallager, welches weitgehend mittig an der Treibscheibe 13 angeordnet ist. Gemäss Fig. 2 ist das Lager 15 weitgehend symmetrisch zwischen zwei Tragmitteln 2 angeordnet, beispielsweise ist das Lager 15 weitgehend mittig an der Treibscheibe 13 angeordnet. Gemäss Fig. 3 sind zwei Lager 15 am Rotor 42 angeordnet. Gemäss Fig. 3 sind die beiden Lager 15 weitgehend symmetrisch zu den Tragmitteln 2 der Treibscheibe 13 angeordnet. Auf diese Weise wird die gesamte Last von Aufzugskabine 1 und Gegengewicht 3 symmetrisch über die beiden Tragmittel 2 in das Lager 15 geleitet. Gemäss Fig. 2 ist der Rotor 42 fliegend gelagert. Bei Kenntnis der Erfindung kann der Fachmann natürlich auch andere Arten der Lagerung des Aufzugsantriebs 4 realisieren. So lassen sich zwei Endlager verwenden, welche beispielsweise beide Enden des Rotors lagern.

## Patentansprüche

1. Treibscheibenaufzug (A) mit mindestens einer Aufzugskabine (1) und mindestens einem Aufzugsantrieb (4); wobei der Aufzugsantrieb (4) mindestens einen Stator (41) und mindestens einen Rotor (42) aufweist; welcher Rotor (42) mit mindestens einer Treibscheibe (13) verbunden ist; auf welcher Treibscheibe (13) mindestens ein Tragmittel (2) im Reibschluss aufliegt; welches Tragmittel (2) derart mit der Aufzugskabine (1) verbunden ist, dass eine Drehbewegung des Rotors (42) und der Treibscheibe (13) die Aufzugskabine (1) bewegt, **dadurch gekennzeichnet, dass** der Rotor (42) ausschliesslich aus weichmagnetischem Werkstoff besteht.

2. Treibscheibenaufzug (A) gemäss Patentanspruch 1, **dadurch gekennzeichnet, dass** Rotor (42) und Treibscheibe (13) stoffschlüssig und/oder formschlüssig und/oder kraftschlüssig miteinander verbunden sind
und/oder dass der Rotor (42) geblecht und die Treibscheibe (13) gegossen ist; und dass Rotor (42) und Treibscheibe (13) stoffschlüssig und/oder formschlüssig und/oder kraftschlüssig miteinander verbunden sind
und/oder dass Rotor (42) und Treibscheibe (13) einstückig miteinander verbunden sind.

3. Treibscheibenaufzug (A) gemäss einem der Patentansprüche 1 oder 2, **dadurch gekennzeichnet, dass** ein Durchmesser der Treibscheibe (13) kleiner als ein Durchmesser von Stator (41) und/oder Rotor (42) ist.

4. Treibscheibenaufzug (A) gemäss einem der Patentansprüche 1 bis 3, **dadurch gekennzeichnet, dass** das Tragmittel (2) ein Riemen mit Tragelementen aus Stahldrähten oder Aramidfasern ist, welche Tragelemente von einem Elastomer ummantelt sind.

5. Treibscheibenaufzug (A) gemäss einem der Patentansprüche 1 bis 4, **dadurch gekennzeichnet, dass** die Treibscheibe (13) über mindestens ein Lager (15) zentral gelagert ist
und/oder dass die Treibscheibe (13) über mindestens ein Lager (15) zentral gelagert ist; und dass das Lager (15) weitgehend symmetrisch zwischen Tragmitteln (2) an der Treibscheibe (13) angeordnet ist
und/oder dass der Rotor (42) über zwei Lager (15) gelagert ist
und/oder dass der Rotor (42) über zwei Lager (15) gelagert ist; und dass die zwei Lager (15) weitgehend symmetrisch zu Tragmitteln (2) der Treibscheibe (13) angeordnet sind.

6. Treibscheibenaufzug (A) gemäss Patentanspruch 1, **dadurch gekennzeichnet, dass** der Aufzugsantrieb (4) ein geschalteter Reluktanzmotor ist, bei dem einzelne Induktionsspulen (411) von mindestens einer Aufzugssteuerung (8) mit in zeitlicher Länge und Form variablen Steuerimpulsen (I) geschaltet sind.

7. Treibscheibenaufzug (A) gemäss Patentanspruch 6, **dadurch gekennzeichnet, dass** der Aufzugsantrieb (4) von der Aufzugssteuerung (8) so geschaltet ist, dass ein Wirkungsgrad (υ) des Aufzugsantriebs (4) weitgehend unabhängig von einer Zuladung (Z) der Aufzugskabine (1) ist
und/oder dass der Aufzugsantrieb (4) von der Aufzugssteuerung (8) so geschaltet ist, dass ein Wirkungsgrad (υ) des Aufzugsantriebs (4) weitgehend unabhängig von einer Fahrkurve (F) der Aufzugskabine (1) ist
und/oder dass der Aufzugsantrieb (4) von der Aufzugssteuerung (8) so geschaltet ist, dass eine Welligkeit eines Drehmoments (M) des Aufzugsantriebs (4) minimal ist
und/oder dass der Stator (41) mehrere Stator-Pole (410) aufweist; dass der Rotor mehrere Rotor-Pole (420) aufweist; dass eine Form der Stator-Pole (410) und eine Gegenform der Rotor-Pole (420) so zueinander geformt sind, dass beim Schalten des Aufzugsantrieb (4) von der Aufzugssteuerung (8) ein Wirkungsgrad (υ) des Aufzugsantriebs (4) weitgehend unabhängig von einer Zuladung (Z) der Aufzugskabine (1) ist
und/oder dass der Stator (41) mehrere Stator-Pole (410) aufweist; dass der Rotor mehrere Rotor-Pole (420) aufweist; dass eine Form der Stator-Pole (410) und eine Gegenform der Rotor-Pole (420) so zueinander geformt sind, dass beim Schalten des Aufzugsantrieb (4) von der Aufzugssteuerung (8) ein Wirkungsgrad (υ) des Aufzugsantriebs (4) weitgehend unabhängig von einer Fahrkurve (F) der Aufzugskabine (1) ist
und/oder dass der Stator (41) mehrere Stator-Pole (410) aufweist; dass der Rotor mehrere Rotor-Pole (420) aufweist; dass eine Form der Stator-Pole (410) und eine Gegenform der Rotor-Pole (420) so zueinander geformt sind, dass beim Schalten des Aufzugsantrieb (4) von der Aufzugssteuerung (8) eine Welligkeit eines Drehmoments (M) des Aufzugsantriebs (4) minimal ist.

8. Aufzugsantrieb (4) zur Verwendung im Treibscheibenaufzug (A) gemäss einem der Patentansprüche 1 bis 7, **dadurch gekennzeichnet, dass** der Stator (41) mehrere Stator-Pole (410) aufweist; dass der Rotor mehrere Rotor-Pole (420) aufweist; dass eine Anzahl Stator-Pole (410) von einer Anzahl Rotor-Pole (420) unterschiedlich ist; dass die Stator-Pole (410) mit Induktionsspulen (411) bewickelt sind; dass solange ein elektrischer Statorstrom eine Induktionsspule (411) durchfliesst, diese Induktionsspule (411) ein magnetisches Feld erzeugt; und dass das magnetische Feld einer Induktionsspule (411) eine Reluktanzkraft auf einen nächstgelegenen Rotor-Pol (420) ausübt und diesen zum Stator-Pol (410) der Induktionsspule (411) zieht.

9. Aufzugsantrieb (4) gemäss Patentanspruch 8, **dadurch gekennzeichnet, dass** der Aufzugsantrieb (4) ein Innenläufer ist, bei dem ein Durchmesser des Rotors (42) kleiner als ein Durchmesser des Stators (41) ist.

10. Aufzugsantrieb (4) gemäss einem der Patentansprüche 8 oder 9, **dadurch gekennzeichnet, dass** der Aufzugsantrieb (4) im Betrieb einen Schalleistungspegel (L_{W}) von 68dB, vorzugsweise 65dB, vorzugsweise 62dB unterschreitet
und/oder dass der Aufzugsantrieb (4) im Betrieb einen Beschleunigungspegel (L_{A}) von 90dB, vorzugsweise 85dB, vorzugsweise 80dB unterschreitet.

11. Aufzugsantrieb (4) gemäss einem der Patentansprüche 8 bis 10, **dadurch gekennzeichnet, dass** der Aufzugsantrieb (4) ein geschalteter Reluktanzmotor ist, der für ein Antreiben des Rotors (42) elektrische Energie aus einer elektrischen Stromversorgung (11) aufnimmt und der aus einem Bremsen des Rotors (42) elektrische Energie generiert und in die elektrische Stromversorgung (11) speist.

12. Verfahren zum Betreiben eines Aufzugsantriebs (4) gemäss einem der Patentansprüche 8 bis 11, **dadurch gekennzeichnet, dass** der elektrische Statorstrom so geschaltet wird, dass ein Wirkungsgrad (υ) des Aufzugsantriebs (4) weitgehend unabhängig von einer Zuladung (Z) der Aufzugskabine (1) ist.

13. Verfahren zum Betreiben eines Aufzugsantriebs (4) gemäss einem der Patentansprüche 8 bis 11, **dadurch gekennzeichnet, dass** der elektrische Statorstrom so geschaltet wird, dass ein Wirkungsgrad (υ) des Aufzugsantriebs (4) weitgehend unabhängig von einer Fahrkurve (F) der Aufzugskabine (1) ist.

14. Verfahren zum Betreiben eines Aufzugsantriebs (4) gemäss einem der Patentansprüche 8 bis 11, **dadurch gekennzeichnet, dass** der elektrische Statorstrom so geschaltet wird, dass eine Welligkeit eines Drehmoments (M) des Aufzugsantriebs (4) minimal ist.

15. Verfahren zum Betreiben eines Aufzugsantriebs (4) gemäss einem der Patentansprüche 8 bis 11, **dadurch gekennzeichnet, dass** der elektrische Statorstrom so geschaltet wird, dass der Aufzugsantrieb (4) im Betrieb einen Schalleistungspegel (L_{W}) von 68dB, vorzugsweise 65dB, vorzugsweise 62dB unterschreitet
und/oder dass der elektrische Statorstrom so geschaltet wird, dass der Aufzugsantrieb (4) im Betrieb bei Frequenzen von 63Hz bis 500Hz einen maximalen A-bewerteten Schalldruckpegel (L_{A}) von 90dB, vorzugsweise 85dB, vorzugsweise 80dB unterschreitet.
